# EUROPEAN PATENT SPECIFICATION

(11) **EP 1 059 112 B1**
(45) Date of publication and mention of the grant of the patent: **24.06.2009**
(21) Application number: 00302607.7
(22) Date of filing: 29.03.2000
(51) Int. Cl.: B01D 53/64, F23J 15/00, B01D 47/06, B01D 53/78

(54) **Method for removing mercury from flue gases**
Verfahren zur Entfernung von Quecksilber aus Abgasen
Procédé pour l'élimination du mercure des fumées

(30) Priority: 31.03.1999 US 282817; 17.12.1999 US 464806
(43) Date of publication of application: 13.12.2000
(73) Proprietor: McDermott Technology, Inc., New Orleans, Louisana 70112 (US); Babcock & Wilcox Power Generation Group, Inc., New Orleans LA 70112 (US)
(72) Inventor: Downs, William, Alliance, Ohio 44601 (US); Bailey, Ralph T., Uniontown, Ohio 44685 (US); Nolan, Paul S., North Canton, Ohio 44720 (US); Vecci, Stanley J., Alliance, Ohio 44601 (US)
(74) Representative: Robinson, Nigel Alexander Julian

(56) References cited:
- EP-A- 0 709 128
- DE-A- 19 731 162
- DE-U- 9 303 842
- US-A- 3 331 732
- US-A- 3 817 713
- US-A- 5 215 557
- US-A- 5 814 288

## Description

The present invention relates generally to the field of combustion and industrial or flue gas cleanup methods and apparatus and, in particular, to methods and apparatus for removing mercury from industrial gases such as the flue gases generated during the combustion of fossil fuels such as coal, or solid wastes.

In recent years, the U.S. Department of Energy (DOE) and the U.S. Environmental Protection Agency (EPA) have supported research to measure and control the emissions of Hazardous Air Pollutants (HAPs) from coal-fired utility boilers and waste to energy plants. The initial results of several research projects showed that the emissions of heavy metals and volatile organic carbons (VOCs) are very low, except for mercury (Hg). Unlike the majority of the other metals, most of the mercury remains in the vapor phase and does not condense onto fly ash particles at temperatures typically used in electrostatic precipitators and fabric filters. Therefore, it cannot be collected and disposed of along with fly ash, as is possible with the other metals. To complicate matters, mercury can exist in its oxidized (Hg⁺²) form, principally as mercuric chloride, (HgCl₂), or in its elemental (Hg⁰) form as vaporous metallic mercury. The relative amount of each species appears to depend on several factors such as fuel type, boiler combustion efficiency, the type of particulate collector installed, and various other factors.

The search for industrially acceptable methods for the capture of mercury from industrial flue gases has included a significant effort to determine how much mercury can be removed by existing, conventional air pollution control equipment, such as wet or dry scrubbers.

Accordingly, tests have been performed on several commercial scale and pilot scale wet scrubbers, which are designed for the capture of sulfur oxides and other acid gases. In addition to being equally applicable to dry scrubber situations, these tests have produced some expected and some surprising results. These tests have produced some expected and some surprising results. It was generally expected that the oxidized mercury would be easily captured and the elemental mercury would be difficult to capture. These expectations were based on the high solubility of mercuric chloride in water and the very low solubility of elemental mercury in water. This expectation was generally fulfilled.

The surprising result concerned elemental mercury. Repeated tests during which the concentration of elemental mercury in the flue gas was measured revealed that more elemental mercury was leaving the wet scrubber than was entering.

One postulate proposed to explain the cause of the elemental mercury generation in the wet scrubber is described for example, by the following general reactions:

Mₑ^{x} + Hg⁺² → Mₑ^{x+2} + Hg⁰

2Mₑ^{x} + Hg⁺² → 2Mₑ^{x+1} + Hg⁰

Mₑ is any number of transition metals such as Fe, Mn, Co, Sn, etc., that may be present in one of several possible oxidation states, x.

Transition metal ions are generally present in wet scrubber slurries as impurities in the industrial applications of concern. Thus, as the mercuric chloride is absorbed, a portion reacts with and becomes reduced by trace levels of transition metals and metal ions and because of its low solubility the elemental mercury is stripped from the liquid and returned to the flue gas.

Most of the recent efforts to capture and remove mercury from the flue gas produced by coal-fired units have concentrated on gas-phase reactions with introduced reagents such as activated carbon.

The subject of mercury emissions by the utility and waste to energy industries is a new area being investigated by both the DOE and EPA.

EP-A-0 709 128 discloses removal of mercury from waste gases containing dust and other gaseous pollutants by spraying aqueous sodium sulfide into the waste gas and then passing it through a bed forming filter. Dust may be removed from the waste gas using an electrostatic filter.

DE-U-9303842 describes use of a precipitant with thioacetamide for the precipitation of heavy metals from waste gases and gas washers of fossil fuel power stations and waste incinerators.

Aspects of the invention are defined in the accompanying claims.

According to an embodiment of the invention, there can be provided a means in a wet or dry scrubber to rapidly precipitate the oxidized mercury at the gas/liquid interface in the scrubber before it can be reduced by the transition metals. One of the most insoluble forms of mercury is mercuric sulfide, which in mineral form is cinnabar. Means for supplying a source of sulfide to react with the oxidized mercury include use of aqueous sulfide ions (or aqueous sulfide ions and hydrogen sulfide gas). Thus, at the gas/liquid interface in the scrubber, the following reactions are proposed for the absorption and precipitation of ionized (oxidized) mercury (depending upon whether the sulfide is derived from hydrogen sulfide gas, aqueous sulfide ions, or some other sulfide ion source):

S⁻²(aq) + HgCl₂(g) → HgS(s) + 2Cl⁻(aq)

and/or

H₂S(g) + HgCl₂(g) → HgS(s) + 2 HCl(aq)

HgS has a solubility product of 3x10⁻⁵² and therefore precipitates essentially completely. The aqueous sulfide species is added to the scrubbing liquor of the scrubber and comes into contact with the mercury in the flue gas, such that HgS is formed when the mercury is absorbed into the liquor. Likewise, in the case of hydrogen sulfide gas, there is good reason to expect that the precipitation reaction proceeds faster than the reduction reactions. Specifically, in the case of the precipitation reaction, both reactants are well mixed in the gas phase. Thus, as they diffuse from the gas to the gas/liquid interface, both reactants can react instantly at the interface. By contrast, the reduction reactions require that the reactants, i.e., the Hg+2 and the transition metal ion, diffuse in the liquid phase to a reaction plane in the liquid. Liquid phase diffusion is orders of magnitude slower than gas phase diffusion.

Therefore, using aqueous sulfide species (or aqueous sulfide species and gas), the oxidized mercury will rapidly precipitate as cinnabar in the scrubber and thereby prevent the reduction of that mercury back to vaporous elemental mercury. The precipitation of mercury as cinnabar has a distinct advantage over other mercury sequestering methods in that it converts mercury to a very insoluble form. In this way, the mercury should be inert and effectively removed from the food chain.

The aqueous sulfide-related embodiments of the present invention contemplate means for providing sulfide ions, including but not limited to hydrosulfide (HS⁻) ions. Notably, such hydrosulfide ions (HS⁻) provide sulfide ions (S⁻²) by virtue of the equilibrium in aqueous solution:

S⁻² (aq) + H₂0 ⇆ HS⁻ (aq) + OH⁻ (aq)

This means can be accomplished through the addition of an aqueous sulfide species, such as sulfidic waste water, kraft caustic liquor, and/or kraft carbonate liquor, to the scrubbing liquor in the scrubber. Further, control means, such as a separate storage tank and metering pump, may be employed to selectively control the provision of sulfide to meet specific operational requirements.

This system has an inherent safety advantage in that no H₂S, which is odorous and toxic, is accumulated or stored. Further, the system is versatile in that it is equally applicable to wet or dry scrubbers and may be incorporated into current emissions control systems with minimal modifications or additions.

The invention will now be described by way of example with reference to the accompanying drawings, throughout which like parts are referred to by like references, and in which:
- Fig. 1: is an illustration of a coal-fired utility boiler installation of the type used by utilities in the generation of electric power;
- Fig. 2: is an illustration of a hydrogen sulfide H₂S generation system as particularly applied to a wet scrubber of Fig. 1;
- Fig. 3: is an enlarged partial view of the circled area in Fig. 2, illustrating an example of a system for injecting H₂S into flue gases for mercury control
- Fig. 4: is an enlarged partial view of the circled area in Fig. 2, illustrating another example of a system for injecting H₂S into flue gases for mercury control
- Fig. 5: is a chart illustrating the results of tests comparing performance without H₂S injection to performance with H₂S injection;
- Fig. 6: is an illustration of a coal-fired utility boiler installation of the type used by utilities in the generation of electric power which employs a dry scrubber flue gas desulfurization system;
- Fig. 7: is a schematic illustration of an aqueous sulfide embodiment of a wet scrubber according to the invention; and
- Fig. 8: is a schematic illustration of an aqueous sulfide embodiment of a dry scrubber according to the invention.

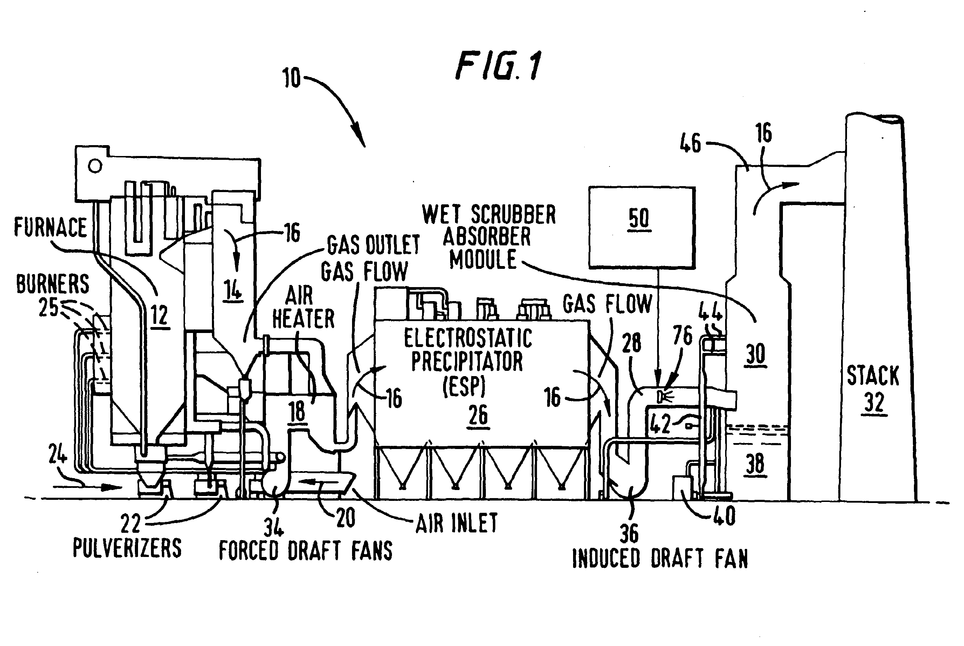

Referring to the drawings generally, wherein like reference numerals designate the same or functionally similar elements throughout the several drawings, and to Fig. 1 in particular, Fig. 1 illustrates a coal-fired utility boiler installation of the type used by utilities in the generation of electric power; generally designated 10, and which represents one type of industrial process to which the present invention is applicable. According to an embodiment of the invention, there can be provided a method for removing mercury from the flue gas generated during the combustion of fossil fuels or solid wastes through the use of aqueous sulfide ions (or aqueous sulfide ions and hydrogen sulfide gas). Of course, while the aforementioned coal-fired utility boiler installations are but one example, and the method of the present invention will likely first find commercial application to the removal of mercury from the flue gases produced by such utility boiler installations which combust such fossil fuels, any industrial process using a wet scrubber type of absorber module to purify such flue gases may benefit. Such processes could include incineration plants, waste to energy plants, or other industrial processes which generate gaseous products containing mercury. Thus for the sake of convenience, the terms industrial gas, flue gas, or simply gas will be used in the following discussion to refer to any gas from an industrial process and from which an objectionable component, such as mercury, is to be removed.

As will be described *infra*, according to an embodiment of the invention there can be provided a method and apparatus for the addition of aqueous sulfide ions (or aqueous sulfide ions and hydrogen sulfide gas) to industrial gases which are treated by dry scrubber flue gas desulfurization systems. Thus, while the majority of the following description is presented in the context of the present invention as being applied to wet scrubber systems, it will be appreciated that the present invention is not limited thereto. Further, since both wet and dry scrubbers remove sulfur species from the flue gas by introduction of an alkali sorbent, some common terminology may be used as appropriate for the sake of convenience. In the case of wet scrubbers, the alkali sorbent can be provided as an aqueous alkali solution or slurry; in dry scrubbers, the alkali sorbent is usually provided as an aqueous alkali slurry. Thus, for the sake of convenience in the following description, the term aqueous alkali reagent will be used to encompass both aqueous alkali solutions and/or aqueous alkali slurries as appropriate to the type of scrubber means being used.

As illustrated in Fig. 1, an proceeding in the direction of flue gas flow generated during the combustion process, the boiler installation 10 includes a furnace 12 having a gas outlet 14 which conveys flue gases, generally designated 16, to an air heater 18 used to preheat incoming air 20 for combustion. Pulverizers 22 grind a fossil fuel 24 (e.g., coal) to a desired fineness and the pulverized coal 24 is conveyed via burners 25 into the furnace 12 where it is burned to release heat used to generate steam for use by a steam turbine-electric generator (not shown). Flue gas 16 produced by the combustion process, are conveyed through the gas outlet 14 to the air heater 18 and thence to various types of downstream flue gas cleanup equipment. The flue gas cleanup equipment may comprise a fabric filter or, as shown, an electrostatic precipitator (ESP) 26 which removes particulates from the flue gas 16. A flue 28 downstream of the ESP 26 conveys the flue gas 16 to a wet scrubber absorber module 30 which is used to remove sulfur dioxide and other contaminants from the flue gas 16. Flue gas 16 exiting from the wet scrubber absorber module or, simply, the wet scrubber 30, is conveyed to a stack 32 and exhausted to atmosphere. Forced draft fans 34 and induced draft fans 36 are used to propel the air 20, fuel 24, and flue gases 16 through the installation 10. For further details of various aspects of such installations 10, the reader is referred to STEAM its generation and use, 40th Ed., Stultz and Kitto. Eds., Copyright Ⓒ 1992 The Babcock & Wilcox Company, particularly to Chapter 35 - Sulfur Dioxide Control, the text of which is hereby incorporated by reference as though fully set forth herein. While the aforementioned STEAM reference contains a description of one form of wet scrubber 30 produced by The Babcock & Wilcox Company (B&W) and to which the present invention is applicable, the present invention is not limited to such B&W wet scrubber designs. Persons skilled in the art will appreciate that the principles of the present invention apply equally well to other types of wet (and, as below, dry) scrubber designs, available from other manufacturers.

The wet scrubber 30 contains, in a lower portion thereof, an inventory of scrubber liquor 38. During operation of the wet scrubber 30, recirculation pumps 40 pump and recirculate the scrubber liquor 38 up through pipes 42 and into absorber spray headers 44 located in an upper portion of the wet scrubber 30. The scrubber liquor 38 is sprayed into the flue gas 16 where it absorbs SO₂. The scrubber liquor 38 falls down through various devices and drains back into the lower portion of the wet scrubber 30. The scrubbed flue gas 16 then exits from a wet scrubber outlet 46 and is eventually conveyed to the stack 32.

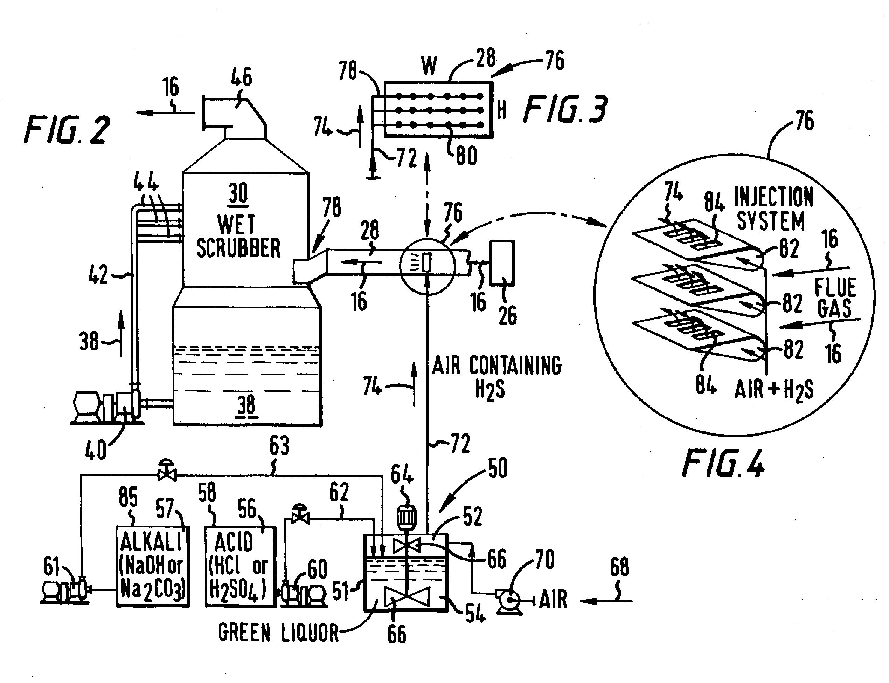

Referring now to Fig. 2 in particular, there is shown an example of a system for accomplishing a method of injecting small amounts of H₂S into flue gas for mercury removal. An H₂S generation system, generally referred to as 50, is provided and includes a well-stirred tank containing a liquid section 54 comprising sodium and/or potassium sulfide and a gas section 52 where air and H₂S are mixed and the mixture 74 of air and H₂S is transferred to an injection apparatus 76, described *infra*. The H₂S vapor pressure in the tank 51 is controlled by pH. The pH in the tank 51 liquid solution 54 is controlled by the addition of a strong mineral acid 56, such as hydrochloric or sulfuric acid (HCl or H₂SO₄) from a tank or container 58, or by the addition of an alkali solution 57 such as sodium carbonate or sodium hydroxide (NaOH or Na₂CO₃) from a tank or container 85. The acid is added to lower the pH and increase the H₂S vapor pressure in tank 51. The alkali is added to raise the pH and lower the H₂S vapor pressure in tank 51. The H₂S produced is immediately transported to the injection system 76. This is an inherent safety feature since no gaseous H₂S is allowed to accumulate. Stirring or mixing means, advantageously comprising a motor 64 and driven stirring shaft with two paddles 66, keep the tank sections 52 and 54 well stirred. As a result, the constituents in the liquid zone 54 are well mixed to yield the H₂S at the desired vapor pressure and the air 68 and generated H₂S are well mixed in the gas section 52. Pumping means 60 conveys the mineral acid 56 to the tank 51 via line 62; pumping means 61 conveys the alkali solution 57 to the tank 51 via line 63. Suitable control valves in lines 62 and 63 would be used as needed to control the flow of acid 56 and alkali 57.

Air 68 is provided by fan (blower or compressor) means 70 into the upper section 52 of tank 51 where it mixes with the H₂S. Line 72 from the upper section of the tank 51 conveys the mixture 74 of air and H₂S to an injection system 76 in flue 28 for injecting the H₂S-air mixture 74 into the flue gas 16.

The rate of hydrogen sulfide generation is controlled by the rate of acid addition. The rate of air 68 provided into the tank 52 is controlled by the fan means 70 that supplies the air 68 in the quantity and at the pressure necessary for rapid mixing of the H₂S-air mixture 74 with the flue gas 16 at an inlet 78 to the wet scrubber 30.

The H₂S-air injection system 76 can comprise one or more pipes 78 arranged in a simple grid, each of the pipes 78 being provided with a plurality of apertures 80, the pipes 78 arranged across a width W and height H of flue 28, as shown in Fig. 3. Alternatively, the H₂S-air injection system 76 could utilize a more sophisticated structure incorporating air foil mixing technology such as that illustrated in Fig. 4. In the system of Fig. 4, one or more air foils 82 would be provided, each having a plurality of slots or apertures 84 for introducing the H₂S-air mixture 74 into the flue gas 16 as the flue gas 16 flows across the air foils 82. In either case, the flue gas 16 flowing past the pipes 78 or air foils 82 picks up the H₂S-air mixture 74 and conveys it to the wet scrubber 30 to increase the H₂S content in the flue gas 16 to a desired level, preferably between about 0.05 and 10 ppm, or more preferably 2 ppm or below.

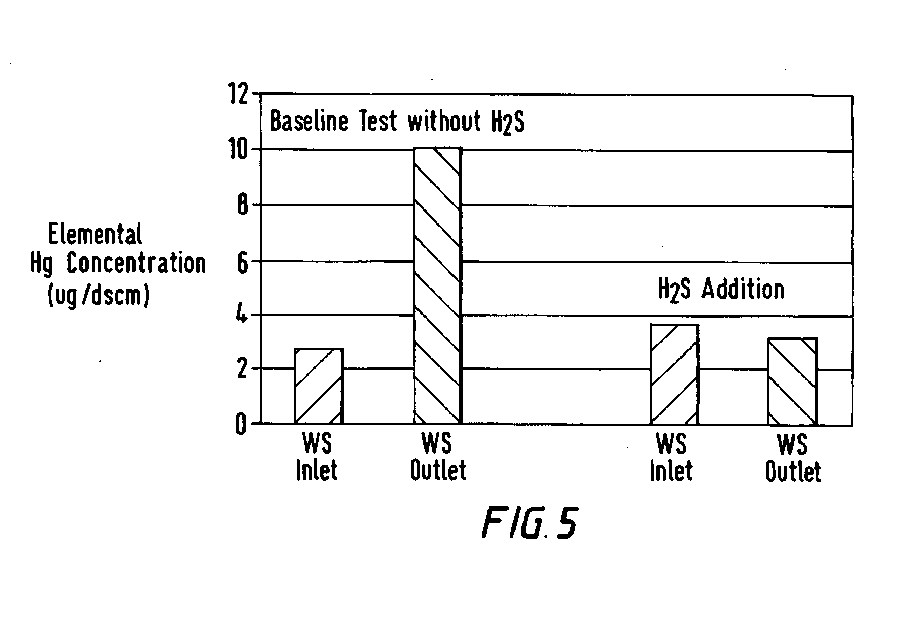

Fig. 5 depicts test results obtained when a pilot scale wet scrubber was used to capture mercury. In Fig. 5, the legends "WS Inlet" and "WS Outlet" refer to conditions at the wet scrubber 30 inlet and outlet, respectively. The left two bars represent baseline conditions of the elemental mercury content of the flue gas 16 at the wet scrubber inlet and outlet, without H₂S addition. The large increase in elemental mercury at the wet scrubber outlet is due to the chemical reduction of oxidized mercury within the wet scrubber 30 according to the reactions previously noted. The right two bars represent the improved performance achieved when H₂S was injected at a concentration of about two parts per million (2 ppm). As shown, the chemical reduction of oxidized mercury to elemental mercury was completely prevented.

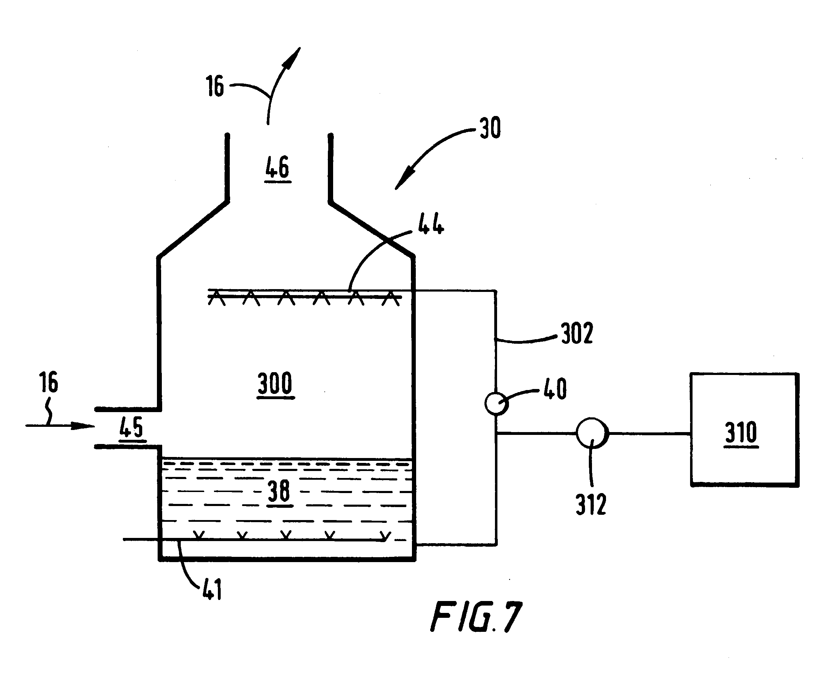

Fig. 7 depicts a detailed schematic of a preferred embodiment of the wet scrubber 30 for use with sulfide containing liquors. Wet scrubber 30 comprises a main chamber 300 with scrubber inlet 45 and scrubber outlet 46. As above, main chamber 300 has a lower portion containing an inventory of scrubber liquor 38 which recirculates from the main chamber 300 into absorber spray headers 44 by means of general recirculation line 302. General recirculation line 302 may comprise pipes 42 and recirculation pumps 40. Frequently, the lower portion of main chamber 300 containing scrubber liquor 38 will include means for injecting air, such as air sparger 41, into the scrubber liquor 38. The use of air sparger 41 oxidizes the products of SO₂ absorption in scrubbing liquor 38. Finally, scrubber liquor 38 may be contained in a bulk storage vessel which forms the lower portion of main chamber 300 (as pictured), or it may comprise a separate holding tank connected to a drain in the main chamber 300 and recirculation line 302.

An aqueous sulfide species may be added directly to scrubber liquor 38 and mixed with the flue gas 16 via spray headers 44. Further, by injecting an aqueous sulfide ion solution directly into recirculation pump 40 and/or general recirculation line 302, the added sulfide solution will not be prematurely oxidized before contacting and scrubbing flue gas 16 in the main chamber 300. Most preferably, sulfide ions can be provided by means of sulfidic waste water, kraft caustic liquor, and/or kraft carbonate liquor.

Alternatively, sulfide ion solution may be added to an isolated sulfide storage tank 310 which is connected to recirculation line 302 upstream of recirculation pump 40. Further, a metering pump 312 may be employed to control the flow of sulfide ions into the wet scrubber 30 and, more particularly, into and/or through recirculation line 302 (a system employing metering pump 312 for control of sulfide into recirculation line 302 only is shown). The concentration of sulfide ion and/or rate of flow into and/or through the recirculation line 302 permits the selective control of the scrubber's overall mercury removing ability. Thus, a coordinated control system, such as using storage tank 310 and/or metering pump 312, is a preferred embodiment of the present invention. The rate of sulfide addition must be proportional to the flue gas flow rate through the scrubber. Most of the sulfide added to the scrubber will be immediately stripped from solution as H₂S in the gas-liquid contact zone. If too much sulfide is added at any one instant, an objectionable odor will emanate from the flue gas at the exit of the stack. It is therefore desirable to limit H₂S concentrations leaving the stack to less than about 2 parts per million (ppm).

To limit the H₂S concentration in flue gas 16 exiting the scrubber to no more than about 2 ppm, the maximum rate of sulfide addition must be less than about 8 x 10⁻⁵ gm moles per M³ of treated flue gas. A typical 100 megawatt scrubber module treats about 8 x 10³ M³ per minute of flue gas. For such a module, the maximum sulfide addition rate would be (8 x 10⁻⁵) x (8 x 10³), or 0.64 gm moles/min. If a 2 molar solution of sodium sulfide were used, the feed rate would be 0.32 liters per minute. It is understood that these figures are merely illustrative, and do not represent any sort of limitation of the principles disclosed in this application.

In operation, flue gas 16 flows from inlet 45 into main chamber 300. Sulfide ions added to recirculation line 302 allow spray header 44 to mix the sulfide ions and scrubber liquor 38 with the flue gas 16. This contact initiates the chemical reaction, *supra*, which removes mercury. The flue gas then flows through outlet 46 and into the stack 32. The precipitated mercury remains in scrubber liquor 38 and can be subsequently removed and disposed of by various methods known to those skilled in the art.

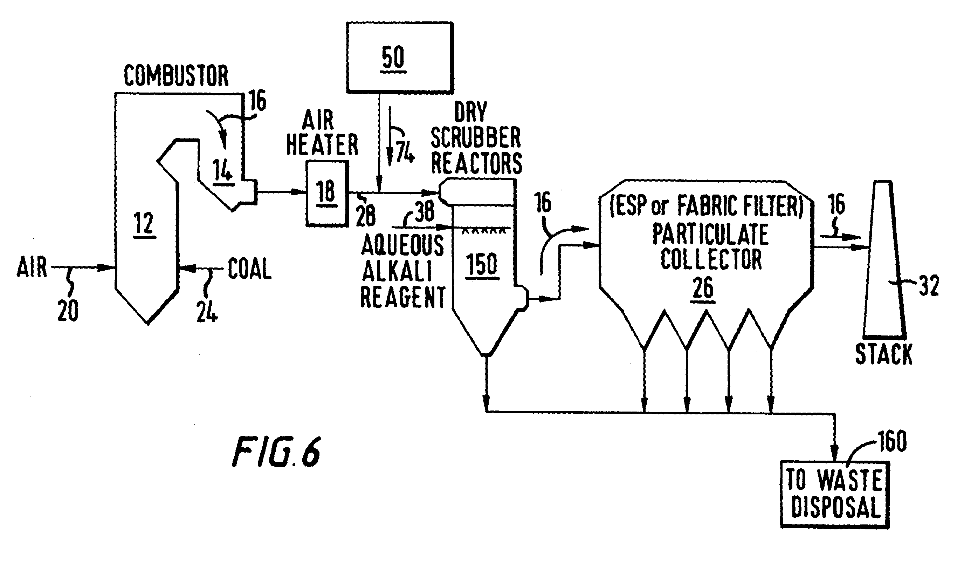

As described earlier and as illustrated in Fig. 6, the present invention is also applicable to combustion systems employing dry scrubbers for flue gas desulfurization. Again, like reference numerals designate the same or functionally similar parts. Flue gas 16 produced by the combustion process are conveyed through the gas outlet 14 to the air heater 18 and thence to various types of downstream flue gas cleanup equipment. A flue 28 conveys the flue gas 16 to a dry scrubber absorber module 150 which is used to remove sulfur dioxide and other contaminants from the flue gas 16. Flue gas 16 exiting from the dry scrubber 150 is conveyed to a fabric filter or, as shown, an electrostatic precipitator (ESP) 26 which removes particulates from the flue gas 16 and then the flue gas 16 is conveyed to a stack 32 and exhausted to atmosphere. As in Fig. 1, forced draft fans 34 and induced draft fans 36 (not shown in Fig. 6) are used to propel the air 20, fuel 24, and flue gases 16 through the installation 10 as before.

Advantages of using hydrogen sulfide gas include the fact that the cost of control of mercury emissions is relatively insignificant compared to the costs for control of other hazardous air pollutants. Further, the amount of H₂S required should be below the threshold odor level. The cost and operating expenses of a system as depicted in Fig. 2 should be substantially less compared to any other system proposed to date. According to a preferred embodiment of the present invention, one source of the sodium sulfide used to generate the H₂S can comprise green liquor, an intermediate chemical used in the Kraft pulp and paper industry and which is readily available from pulp and paper companies. As is known to those skilled in the art, green liquor consists of an aqueous mixture of sodium sulfide and sodium carbonate. Green liquor is relatively easy and safe to handle and should be widely available.

When hydrogen sulfide gas is used, the mercury in the flue gas 16 ends up as mercuric sulfide (also known as cinnabar). This is the chemical form that mercury is most often found in nature and is probably the most desirable chemical form to sequester mercury. Much of the mercury in this form is present as a fine particulate in the scrubber slurry and for that reason, it is possible to separate much of the mercury from the gypsum crystals.

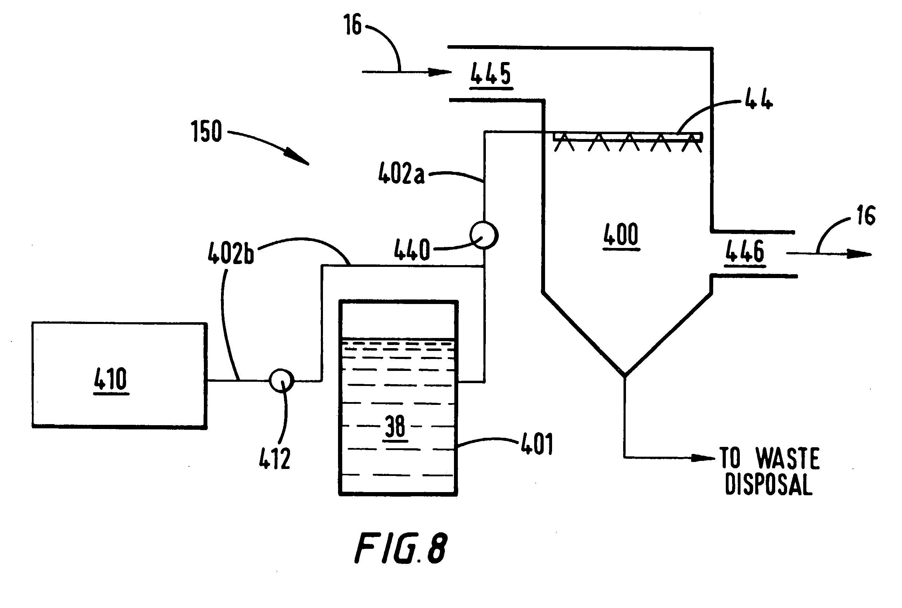

Fig. 8 depicts a detailed schematic of a preferred embodiment of the dry scrubber 150 for use with sulfide containing liquors. Dry scrubber 150 comprises a main chamber 400 with spray header 44, scrubber inlet 445, and scrubber outlet 446. Notably, scrubber liquor 38 may be contained in a bulk storage vessel 401 and,provided to main chamber 400 by means of first feed line 402a. Feed line 402a may contain a scrubber liquor feed pump 440.

An aqueous sulfide species may be added directly to scrubber liquor 38 in vessel 401, pumped to main chamber 400 via first feed line 402a, and mixed with flue gas 16 via spray headers 44. Most preferably, sulfide ions can be provided by means of sulfidic waste water, kraft caustic liquor, and/or kraft carbonate liquor.

Alternatively, sulfide ion solution may be added to an isolated sulfide storage tank 410 and introduced into the main chamber 400 via spray header 44. Tank 410 is connected to second feed line 402b. Further or in the alternative, a metering pump 412 may be employed to control the flow of sulfide ions into the dry scrubber 150 and, more particularly, into feed line(s) 402a and/or bulk storage vessel 401 (a system employing metering pump 412 for control of feed line 402a only is pictured). The concentration of sulfide ion and/or rate of flow into and/or through the feed line(s) 402a and/or 402b permits the selective control of the scrubber's overall mercury removing ability. Thus, a coordinated control system, such as using storage tank 410 and/or metering pump 412, is a preferred embodiment of the present invention. However, control of sulfide ions provided to the gas may also be achieved by periodic and/or manual addition of the aqueous sulfide ions into the scrubber system by way of a valve, port, or other injection device or by means of a separate system (i.e., chamber, storage means, spray headers, and/or recirculation line).

In operation, flue gas 16 flows from inlet 445 into main chamber 400. Sulfide ions added to feed line 402a and/or bulk storage vessel 401 allow spray header 44 to mix the sulfide ions and scrubber liquor 38 with the flue gas 16. This contact initiates the chemical reaction, *supra*, which removes mercury. The flue gas then flows through outlet 446 and into the stack 32. The precipitated mercury remains in the dried solid product of scrubber 150 and can be subsequently removed and disposed of by various methods known to those skilled in the art.

Advantages of the present invention as used with sulfide containing liquors include the fact that the cost of control of mercury emissions according to the present invention is relatively low compared to the costs for control of other hazardous air pollutants. Further, the use of aqueous sulfide ions can be incorporated with minimal modifications or additions to current emissions control systems. Most significantly, use of aqueous sulfide ions eliminates the need to produce or have available toxic gases, such as hydrogen sulfide gas, which, when mixed with flue gas containing mercury oxidized by an aqueous alkali reagent may be another method for removing mercury from flue gas. Also, aqueous sulfide ions can be easily metered into the main scrubbing liquor inventory at a specific, desired rate in order to enhance efficiency of the scrubber or to achieve specific results.

According to the present invention as used with sulfide containing liquors, the mercury in the flue gas 16 ends up as mercuric sulfide (also known as cinnabar). This is the chemical form that mercury is most often found in nature and is probably the most desirable chemical form to sequester mercury.

While specific embodiments of the invention have been shown and described in detail to illustrate the application of the principles of the invention, it will be understood that the invention may be embodied otherwise without departing from such principles. By way of example and not limitation, while the principles of the present invention were described as being particularly applicable to fossil-fired boiler installations, it will be appreciated by those skilled in the art that the present invention can be used to remove mercury from industrial gases produced by refuse incinerators, refuse boilers, hazardous waste incinerators, or ore roasters.

## Claims

1. A method of using a scrubber (30;150) provided with a scrubbing liquor (38) containing an aqueous alkali reagent, for receiving and scrubbing a flue gas (16) containing oxidized mercury with the scrubbing liquor (38), the method comprising:
adding an aqueous sulfide species selected from of least one of kraft caustic liquor, and kraft carbonate liquor, and sulfidic waste water to the scrubbing liquor (38);
mixing the flue gas (16) with the aqueous sulfide species in order to precipitate the oxidized mercury at a gas-liquid interface within the scrubber (30;150), thereby producing a flue gas from which mercury has been removed within the scrubber (30;150); and
retraining the precipitated mercury within the scrubber (30;150).

2. A method according to claim 1, wherein the scrubber is a wet scrubber (30) and further comprising the step of conveying the flue gas (16) through a dust collector (26) to remove particulates from the flue gas (16) prior to creating the gas-liquid interface in the wet scrubber (30).

3. A method according to claim 1, wherein the scrubber is a dry scrubber (150), and further comprising the step of conveying the mercury-free flue gas (16) to a dust collector (26) to remove non-mercuric particulates from the mercury-free flue gas (16).

4. A method according to claim 2 or claim 3, wherein the dust collector (26) is a fabric filter or an electrostatic precipitator.

5. A method according to claim 1, further comprising controlling the adding of the aqueous sulfide species using a controlled metering pump (312;412) connected to an isolated sulfide ion storage tank (310;410).

## Patentansprüche

1. Verfahren zum Verwenden eines Wäschers (30; 150), der mit einer Waschflüssigkeit (38) versehen ist, welche ein wäßriges Alkalireagens enthält, für das Aufnehmen und Waschen eines Abgases (16), welches oxidiertes Quecksilber enthält, mit der Waschflüssigkeit (38), wobei das Verfahren folgendes umfaßt:
Zugeben einer wäßrigen Sulfidspezies, ausgewählt unter wenigstens einer unter einer kaustischen Kraft-Flüssigkeit, einer carbonathaltigen Kraft-Flüssigkeit und sulfidhaltigem Abwasser, zu der Waschflüssigkeit (38),
Mischen des Abgases (16) mit der wäßrigen Sulfidspezies, um das oxidierte Quecksilber an einer Gas-Flüssigkeits-Grenzfläche innerhalb des Wäschers (30; 150) zu präzipitieren, wodurch innerhalb des Wäschers (30; 150) ein Abgas erzeugt wird, aus welchem Quecksilber entfernt wurde, und
Zurückhalten des präzipitierten Quecksilbers innerhalb des Wäschers (30; 150).

2. Verfahren nach Anspruch 1, wobei der Wäscher ein Naßwäscher (30) ist und das Verfahren weiterhin die Stufe umfaßt, bei der man das Abgas (16) durch einen Staubabscheider (26) hindurchführt, um Partikel aus dem Abgas (16) zu entfernen, ehe die Gas-Flüssigkeits-Grenzfläche in dem Naßwäscher (30) erzeugt wird.

3. Verfahren nach Anspruch 1, wobei der Wäscher ein Trockenwäscher (150) ist und das Verfahren weiterhin die Stufe umfaßt, bei der man das quecksilberfreie Abgas (16) zu einem Staubabscheider (26) befördert, um Nicht-Quecksilber-Partikel aus dem quecksilberfreien Abgas (16) zu entfernen.

4. Verfahren nach Anspruch 2 oder Anspruch 3, wobei der Staubabscheider (26) ein Gewebeabscheider oder ein elektrostatischer Abscheider ist.

5. Verfahren nach Anspruch 1, welches weiterhin das Kontrollieren der Zugabe der wäßrigen Sulfidspezies unter Verwendung einer kontrollierten Dosierpumpe (312; 412), die mit einem isolierten Sulfidionenspeichertank (310; 410) verbunden ist, umfaßt.

## Revendications

1. Procédé d'utilisation d'un épurateur (30 ; 50) pourvu d'une liqueur (38) d'épuration contenant un réactif alcalin aqueux, destiné à recevoir et épurer des gaz de carneau (16) contenant du mercure oxydé à l'aide de la liqueur d'épuration (38), le procédé comprenant :
l'addition d'une espèce de sulfure aqueuse choisie parmi au moins l'une d'une lessive caustique kraft, d'une lessive au carbonate kraft et d'une eau résiduelle sulfidique à la liqueur d'épuration (38) ;
le mélange des gaz de carneau (16) avec l'espèce de sulfure aqueuse pour précipiter le mercure oxydé à une interface gaz-liquide à l'intérieur de l'épurateur (30 ; 150), produisant ainsi des gaz de carneau desquels le mercure a été éliminé à l'intérieur de l'épurateur (30 ; 150) ; et
la retenue du mercure précipité à l'intérieur de l'épurateur (30 ; 150).

2. Procédé selon la revendication 1, dans lequel l'épurateur est un épurateur humide (30) et comprenant en outre l'étape de transport des gaz de carneau (16) à travers un collecteur de poussière (26) pour éliminer des particules des gaz de carneau (16) avant de créer l'interface gaz-liquide à l'intérieur de l'épurateur humide (30).

3. Procédé selon la revendication 1, dans lequel l'épurateur est un épurateur sec (150), et comprenant en outre l'étape de transport des gaz de carneau (16) débarrassés du mercure jusqu'à un collecteur de poussière (26) pour éliminer des particules autres que de mercure des gaz de carneau (16) débarrassés du mercure.

4. Procédé selon la revendication 2 ou la revendication 3, dans lequel le collecteur de poussière (26) est un filtre en étoffe ou un précipitateur électrostatique.

5. Procédé selon la revendication 1, comprenant en outre la commande de l'addition de l'espèce de sulfure aqueuse en utilisant une pompe de dosage commandée (312 ; 412) raccordée à un réservoir isolé (310 ; 410) de stockage d'ions sulfure.
